# EUROPÄISCHE PATENTANMELDUNG

(11) **EP 1 475 653 A1**
(43) Veröffentlichungstag der Anmeldung: **10.11.2004**
(21) Anmeldenummer: 04101575.1
(22) Anmeldetag: 16.04.2004
(51) Int. Cl.: G02B 21/18, G02B 21/36, G02B 21/16

(54) **Mikroskop und Mikroskopierverfahren zur Erzeugung von Überlagerungsbildern**

(30) Priorität: 09.05.2003 DE 10321091
(71) Anmelder: Leica Microsystems Wetzlar GmbH, 35578 Wetzlar (DE)
(72) Erfinder: Ganser, Michael, 35398 Giessen (DE); Weiss,Albrecht, Dr., 35440 Linden (DE)
(74) Vertreter: Reichert, Werner F., Dr.

(57) **Zusammenfassung**

Ein Mikroskop mit einer Durchlicht-Interferenz-Kontrast-Einrichtung mit einem Analysator (1) im Abbildungsstrahlengang weist erfindungsgemäß in Abbildungsrichtung unmittelbar hinter dem Analysator (1) zusätzlich zwei Glaskeilplatten (2, 3) auf, die so ausgebildet und ausgerichtet sind, dass die Summen-Strahlablenkung der beiden Glaskeilplatten (2, 3) die vom Analysator (1) erzeugte Strahlablenkung, welche einen Bildversatz verursacht, zu Null kompensiert. In einem Mikroskopierverfahren zur Erzeugung von Überlagerungsbildern aus einem Durchlicht-Interferenz-Kontrast-Bild und einem Fluoreszenz-Bild, die mit einer Kamera (35) aufgenommen werden, wird der Bildversatz zwischen beiden Bildern kompensiert. Erfindungsgemäß wird die Kompensation des Bildversatzes mit den genannten optischen Mitteln (2, 3) erzeugt. Dies erlaubt eine pixelgenaue Überlagerung der Einzelbilder direkt im Überlagerungsbild.

## Beschreibung

Die Erfindung betrifft ein Mikroskop mit einer Durchlicht-Interferenz-Kontrast-Einrichtung, welche einen Analysator im Abbildungsstrahlengang umfasst,. Die Erfindung betrifft weiterhin ein Mikroskopierverfahren zur Erzeugung von Überlagerungsbildern.

Bei mikroskopischen Untersuchungen und der Dokumentation kommt es häufig vor, das Mehrfachbelichtungen und zusammengesetzte Bilder erzeugt werden, die unterschiedliche Aspekte des Präparats darstellen Die so erzeugten Bilder werden durch unterschiedliche Kontrastverfahren bzw. unterschiedliche Mikroskopieverfahren erzeugt und dann in einem Bild vereinigt. Die Darstellung der unterschiedlichen Bildanteile erfolgt dann beispielsweise durch sogenannte "Falschfarben". Häufig werden beispielsweise die zu untersuchenden Proben mit verschiedenen Fluoreszenzfarbstoffen markiert, die durch unterschiedliche Filterkombinationen angeregt und beobachtet werden können. Die auf diese Weise erzielten Bilder, die jeweils durch eine bestimmte Filterkombination erzeugt werden, werden nachträglich in einem einzelnen Summenbild zusammengesetzt.

In dem hier betrachteten Fall geht es um die Kombination von Bildern, die mittels Durchlicht-Interferenz-Kontrast-Mikroskopie (ICT) und Fluoreszenzmikroskopie aufgenommen werden. Das mittels ICT-Verfahren erzeugte Bild zeigt dann das ungefärbte biologische Präparat als ganzes. Demgegenüber zeigt das mittels Fluoreszenzmikroskopie erzeugte Bild lediglich gezielte und spezifische Markierungen bestimmter Stellen. Die mit den beiden Verfahren erzeugten Bilder werden dann in einem Überlagerungsbild zusammengefügt.

Die auf diese Weise erzeugten Überlagerungsbilder werden jeweils auf eine Kamera abgebildet. Dabei ist es bei der Erzeugung eines solchen Überlagerungsbildes wünschenswert, dass das ICT-Bild auf dem CCD-Chip der Kamera an exakt der gleichen Stelle liegt wie die Fluoreszenzbilder bzw. wie ein Durchlicht-Hellfeld-Bild. Sollten nämlich die Bilder gegeneinander verschoben auf dem CCD-Chip abgebildet werden, ist die Auswertung des Bildes beeinträchtigt.

Beim ICT-Verfahren befindet sich ein Polarisationsfilter, das als Analysator dient, im abbildenden Strahlengang des Mikroskops. Meistens ist dieser Analysator zwischen dem Mikroskopobjektiv und der Tubuslinse angeordnet. Da der Analysator für unpolarisiertes Licht eine Transmission von nur etwa 30 % hat, wird er meistens auch nur für das ICT-Verfahren in den Strahlengang gebracht. Für die Fluoreszenzmessung bzw. die Fluoreszenzbeobachtung, bei der im allgemeinen schwache Intensitäten auftreten, wird der Analysator wieder aus dem Strahlengang entfernt.

Polarisationsfilter flacher Bauform, wie sie in der Mikroskopie verwendet werden, bestehen üblicherweise aus einer gereckten Polarisationsfolie, die zwischen zwei Glasplatten verkittet ist. Solche Polarisationsfilter haben den Nachteil, das einfallendes Licht geringfügig abgelenkt wird. Ursache für diese Strahlablenkung sind die gereckte Polarisationsfolie selbst, keilförmige Kittflächen und eventuell keilförmige Glasplatten. Bekannte Polarisationsfilter dieser Art erzeugen daher Strahlablenkungen bis etwa 3 Minuten. Hat beispielsweise das Mikroskop eine Tubuslinse mit einer Brennweite von 200 Millimetern, erzeugt ein solcher Analysator mit einer Strahlablenkung von 3 Minuten einen Versatz des Zwischenbildes der Probe von ca. 175 µm. Dies hat zur Folge, das bei einer CCD-Kamera mit einer Pixelgröße von etwa 8 µm das Bild durch den Analysator um ca. 20 Pixel versetzt wird.

Bisher musste der zwischen dem ICT-Bild und dem Fluoreszenz-Bild entstehende Versatz auf dem CCD-Chip in Kauf genommen werden, wobei zwangsläufig der damit verbundene Qualitätsverlust der Überlagerungsbilder akzeptiert werden musste. Alternativ wurde der Bildversatz der Einzelbilder im Überlagerungsbild bei der digitalen Bildaufnahme bzw. der Verarbeitung der Überlagerungsbilder softwaretechnisch kompensiert, was entsprechende Software und Hardware erforderte und zeitaufwendig ist.

Es ist daher Aufgabe der vorliegenden Erfindung, ein Mikroskop der eingangs genannten Art dahingehend zu verbessern, dass der unerwünschte Versatz der Einzelbilder im Überlagerungsbild vermieden wird.

Diese Aufgabe wird gelöst durch ein Mikroskop mit den Merkmalen des Anspruchs 1.

Die Besonderheit des erfindungsgemäßen Mikroskops besteht darin, dass im Abbildungsstrahlengang zwischen dem Analysator und der Kamera, also in Abbildungsrichtung, unmittelbar hinter dem Analysator zusätzlich zwei Glaskeilplatten angeordnet sind. Der Analysator besteht hierbei aus einem ausgerichteten Polarisationsfilter, das heißt, das dieser Polarisationsfilter bezüglich der durchgelassenen Schwingungsrichtung gezielt orientiert ist (beispielsweise in Nord/Süd-Richtung). Die Glaskeilplatten können grundsätzlich unterschiedlich sein. Es hat sich jedoch als günstig für die Justage erwiesen, wenn zwei identische Glaskeilplatten verwendet werden. Die Glaskeilplatten besitzen einen Keilwinkel α (=Alpha) und bewirken an dem hindurchgehenden Strahl eine Strahlablenkung δ (=Delta), wobei δ ungefähr der Hälfte des Keilwinkels entspricht. Die Keilwinkel α und damit die Strahlablenkung δ der beiden Glaskeilplatten sind so gewählt, dass δ etwa halb so groß ist wie die maximale Ablenkung in Folge des Polarisationsfilters. Dies heißt, dass δ ungefähr 1,5' (=Minuten) beträgt.

Bei der Montage sind die beiden Glaskeilplatten zunächst gegeneinander und gegenüber dem bereits befestigten Polarisationsfilter drehbar gelagert. Es erfolgt dann in der Fertigung des Mikroskops eine Ausrichtung der beiden Glaskeilplatten. Dies kann beispielsweise mit Hilfe einer Autokollimations-Einrichtung erzielt werden, mit der geringste Strahlablenkungen im Bereich von einer Sekunde messbar sind. Bei diesem Vorgang werden die Glaskeilplatten so ausgerichtet, dass die Strahlablenkung der beiden Glaskeilplatten die Strahlablenkung des Polarisationsfilters kompensiert. Dann werden die beiden Glaskeilplatten in dieser Position fixiert und damit gegen ein weiteres Verdrehen gesichert.

Die Erfindung wird nachfolgend anhand der schematischen Zeichnung genauer erläutert. Es zeigen:
- ***Fig. 1:***: Die Anordnung der beiden Glaskeilplatten direkt hinter dem Analysator;
- ***Fig. 2:***: Eine vektorielle Darstellung der Strahlablenkung in der Anordnung, die in Figur 1 gezeigt ist;
- ***Fig. 3:***: Ein Mikroskop mit einer in Wirkstellung befindlichen Kompensationsanordnung des Bildversatzes durch den Analysator;
- ***Fig. 4:***: Eine Mikroskop mit einer in Wirkstellung befindlichen Fluoreszenzeinrichtung.

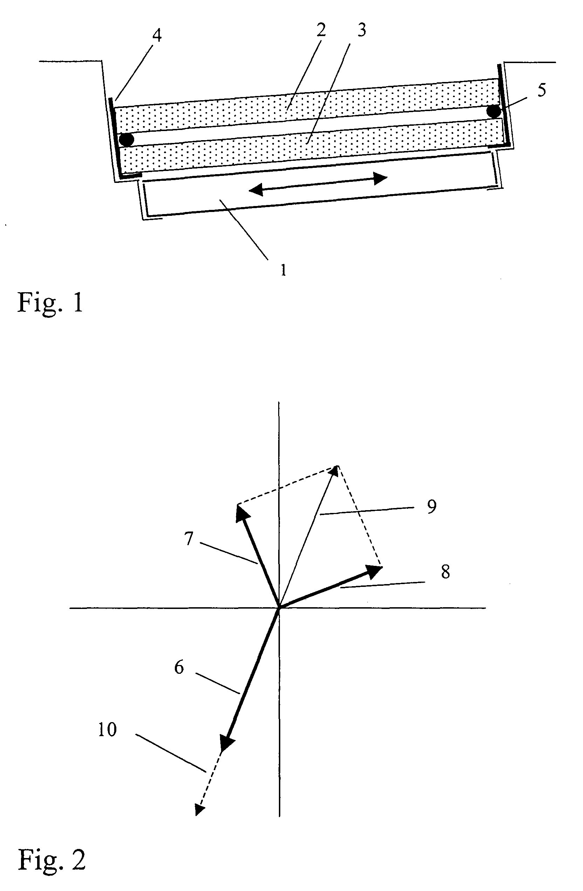

In ***Fig. 1*** ist ein Polarisationsfilter als Analysator 1 angeordnet. Die durchgelassene Schwingungsrichtung ist schematisch durch einen Doppelpfeil angedeutet. Direkt hinter dem Analysator 1 in Richtung der Kamera (nicht dargestellt), also in Abbildungsrichtung, sind eine erste Glaskeilplatte 2 sowie eine zweite Glaskeilplatte 3 angeordnet. Sie befinden sich übereinander innerhalb eines Aufnahmerings 4, wobei die erste Glaskeilplatte 2 und die zweite Glaskeilplatte 3 durch einen Distanzring 5 voneinander getrennt sind. Der Distanzring 5 erlaubt eine Drehung der ersten Glaskeilplatte 2 gegenüber der zweiten Glaskeilplatte 3 bzw. umgekehrt. Auf diese Weise können die Glaskeilplatten 2 und 3 so gegeneinander ausgerichtet werden, das die Summen-Strahlablenkung, die von beiden Glaskeilplatten 2 und 3 in Summe gemeinsam erzeugt wird, die Strahlablenkung des Analysators 1 gerade kompensiert.

***Fig. 2*** zeigt die auftretenden Strahlablenkungen in der Anordnung aus ***Fig. 1*.** Die Darstellung erfolgt mittels Vektoren. Der Vektor 6 gibt die Ablenkung infolge des Analysators 1 wieder. Dabei ist in diesem Beispiel der Vektor 6 als ca. 2/3 der maximal möglichen Ablenkung dargestellt. Der Vektor 7 zeigt die Strahlablenkung durch die erste Glaskeilplatte 2. Der Vektor 8 zeigt die Strahlablenkung durch die erste Glaskeilplatte 3. Durch vektorielle Addition aus Vektor 7 und Vektor 8 erhält man den Vektor 9, der die resultierende Summen-Strahlablenkung durch gemeinsame Wirkung der ersten Glaskeilplatte 2 und der zweiten Glaskeilplatte 3 angibt. Es ist deutlich zu sehen, dass der Betrag des Vektors 9, also der Summen-Strahlablenkung aus beiden Glaskeilplatten 2 und 3, und der Betrag des Vektors 6, also der Strahlablenkung infolge des Analysators 1, gleich sind. Da der Vektor 6 und der Vektor 9 entgegengesetzt gerichtet sind, wird somit mit Hilfe der beiden Glaskeilplatten 2 und 3 die Strahlablenkung des Analysators 1 kompensiert.

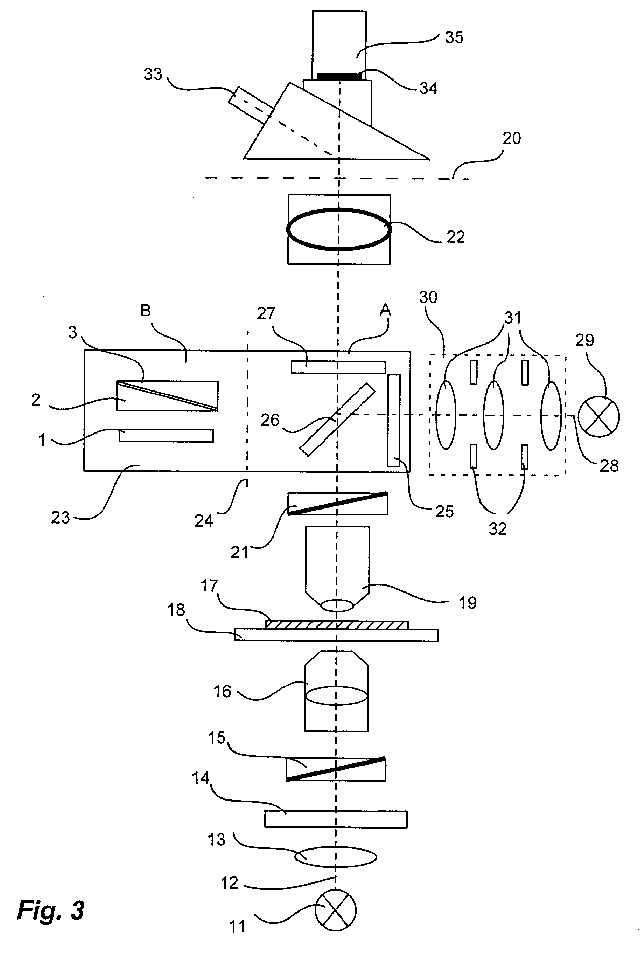

***Fig.* 3** zeigt ein Mikroskop mit einer in Wirkstellung befindlichen Fluoreszenzeinrichtung.

Von einer Durchlicht-Lichtquelle 11 geht ein Durchlichtstrahlengang 12 aus. Das Licht der Durchlicht-Lichtquelle 11 durchläuft nacheinander eine Beleuchtungsoptik 13, einen Polarisator 14, ein erstes Wollastonprisma 15 und einen Kondensor 16. Der aus dem Kondensor 16 austretende Strahlengang beleuchtet eine Probe 17, die auf einem Mikroskoptisch 18 aufgelegt ist.

Der durch die Probe 17 hindurchtretende Licht wird von einem Objektiv 19 erfasst und wird von diesem in eine Zwischenbildebene 20 abgebildet. Zwischen dem Objektiv 19 und der Zwischenbildebene 20 durchläuft der Strahl ein zweites Wollastonprisma 21 und eine Tubusoptik 22, welche unter anderem die Lage der Zwischenbildebene 20 bestimmt.

Zwischen dem zweiten Wollastonprisma 21 und der Tubusoptik 22 ist ein Einrichtungswechsler 23 angeordnet, er mindestens zwei Bereiche A und B zur Aufnahme von Einrichtungen aufweist. Der Einrichtungswechsler 23 ist in der hier dargestellten Ausführungsform um eine Drehachse 24 drehbar gelagert, wobei durch Drehung um die Drehachse 24 alternativ einer der beiden Bereiche A oder B in den Strahlengang eingebracht werden kann. In einer andern, hier nicht dargestellten Ausführungsform, ist der Einrichtungswechsler 23 als seitlich im Strahlengang verstellbarer Schieber aufgebaut. Der Einrichtungswechsler 23 kann außerdem zusätzliche, hier nicht dargestellte Bereiche mit weiteren Einrichtungen, beispielsweise Filtereinrichtungen, aufweisen.

In der gezeigten Einstellung des Einrichtungswechslers 23 befindet sich sein Bereich A im Strahlengang des Mikroskops. In diesem Bereich ist eine Fluoreszenzeinrichtung angeordnet. Sie besteht aus einem Anregungsfilter 25, einem halbdurchlässigen Strahlteiler 26 und einem Sperrfilter 27. Diese Fluoreszenzeinrichtung wird auch als Fluoreszenzwürfel bezeichnet.

Um die Probe 17 mittels der Fluoreszenzeinrichtung untersuchen zu können, wird der Fluoreszenzeinrichtung ein Auflichtstrahlengang 28 zugeführt. Dieser geht von einer Auflicht-Lichtquelle 29 aus und passiert eine Auflicht-Beleuchtungsoptik 30 mit mehren Linsenelementen 31 und Blenden 32. Das Licht des Auflichtstrahlengangs 28 tritt seitlich in den Bereich A ein, durchläuft das Anregungsfilter 25, welches nur bestimmte spektralen Fluoreszenz-Wellenlängenbereiche des Beleuchtungslicht passieren lässt.

Anschließend wird das Auflicht mittels des Strahlteilers 26 in Richtung des Objektivs 19 umgelenkt und durch das Objektiv 19 auf die Probe 17 gerichtet. Das Auflicht erzeugt in bestimmten, in der Probe 17 eingebrachten Fluorochromen eine Fluoreszenzanregung. Von der Probe 17 gelangt das Licht durch das Objektiv 19, das zweite Wollastonprisma 20, durch den Strahlteiler 26 und das Sperrfilter 27 in die Zwischenbildebene 20. Das dort erzeugte Bild der Probe 17 kann mittels eines oder mehrerer Okulare 33 betrachtet werde. Außerdem wird das Bild auf den CCD-Chip 34 einer Kamera 35 abgebildet.

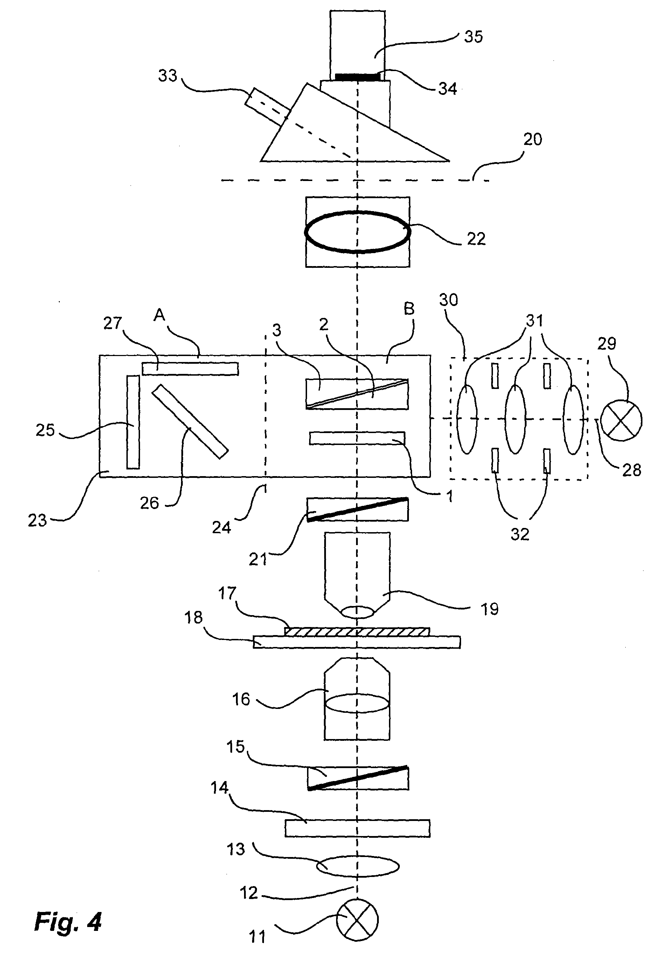

***Fig. 4*** zeigt das Mikroskop aus ***Fig.* 3** mit einer vollständig im Strahlengang angeordneten Durchlicht-Interferenz-Kontrast-Einrichtung, wobei erfindungsgemäß eine Kompensation der Strahlablenkung des Analysators 1 erfolgt.

Wie bereits beschrieben, geht von der Durchlicht-Lichtquelle 11 der Durchlichtstrahlengang 12 aus, in dem die Beleuchtungsoptik 13, der ein Polarisator 14, das erste Wollastonprisma 15 und der Kondensor 16 angeordnet sind. Das Licht des Durchlichtstrahlengangs 12 beleuchtet die Probe 17 und wird durch das Objektiv 19 in die Zwischenbildebene 20 abgebildet. Hinter dem Objektiv 19 durchläuft der Strahl das zweite Wollastonprisma 21 und tritt in den Einrichtungswechsler 23 ein.

In der hier dargestellten Einstellung des Einrichtungswechslers 23 befindet sich sein Bereich B im Strahlengang des Mikroskops. Der Einrichtungswechsler 23 ist seitlich verschlossen, so dass das Auflicht aus dem Auflichtstrahlengang 28 nicht in den Bereich B eintreten kann. In dem Bereich B des Einrichtungswechslers 23 ist ein Analysator 1 angeordnet. Dieser Analysator 1 bildet gemeinsam mit dem Polarisator 14, dem und dem ersten Wollastonprisma 15 und dem zweiten Wollastonprisma 20 eine Durchlicht-Interferenz-Kontrast-Einrichtung.

Dieser Analysator 1 besteht aus einer Polarisationsfolie und erzeugt an dem hindurchtretenden Strahl ein Strahlversatz, wie bereits vorher erläutert. Dieser Strahlversatz führt zu einem Bildversatz des Durchlicht-Interferenz-Kontrast-Bildes auf dem CCD-Chip 34 der Kamera 35 gegenüber dem Fluoreszenzbild, das in der Mikroskopeinstellung gemäß ***Fig. 3*** erzeugt wird.

Erfindungsgemäß wird nun dieser Bildversatz optisch kompensiert. Dazu sind in Abbildungsrichtung unmittelbar hinter dem Analysator 1 zusätzlich zwei Glaskeilplatten angeordnet, die als erste Glaskeilplatte 2 und als zweite Glaskeilplatte 3 bezeichnet sind. Die Glaskeilplatten 2 und 3 sind so ausgebildet und ausgerichtet, dass die von beiden Glaskeilplatten 2 und 3 gemeinsam erzeugte Summen-Strahlablenkung die hinter dem Analysator 1 auftretende erzeugte Strahlablenkung zu Null kompensiert.

Auf diese Weise wird der Bildversatz des Durchlicht-Interferenz-Kontrast-Bildes auf dem CCD-Chip 34 der Kamera 35 gegenüber dem Fluoreszenzbild kompensiert. Bei exakter Justage des beiden Glaskeilplatten 2 und 3 zueinander und gegenüber dem Analysator 1 erfolgt die Abbildung des Durchlicht-Interferenz-Kontrast-Bildes und des Fluoreszenzbildes deckungsgenau und pixelgenau auf dem CCD-Chip 34 der Kamera 35.

Das Erzeugen eines Überlagerungsbildes erfolgt auf folgende Weise:
Es wird ein erstes Mikroskopbild mittels der Durchlicht-Interferenz-Kontrast-Einrichtung erzeugt und mit der Kamera aufgenommen.
Dann wird ein zweites Mikroskopbild mittels der Fluoreszenzeinrichtung erzeugt und ebenfalls mit der Kamera aufgenommen.

Da die Kompensation des Bildversatzes des ersten Mikroskopbildes gegenüber dem zweiten Mikroskopbild mit optischen Mitteln erfolgt, indem in der Durchlicht-Interferenz-Kontrast-Einrichtung in Abbildungsrichtung unmittelbar hinter dem Analysator (1) die beiden zwei Glaskeilplatten (2, 3) erfindungsgemäß angeordnet werden, kann ein Überlagerungsbild direkt erzeugt werden. Das Überlagerungsbild wird erzeugt durch Überlagern des ersten Mikroskopbildes und des zweiten Mikroskopbildes, indem das erste Mikroskopbild und das zweite Mikroskopbild jeweils in einen Bildspeicher übertragen und dort pixelgenau addiert (gestapelt) werden. Es besteht auch die Möglichkeit mehrere, also mehr als zwei, Bilder der genannten Art aufzuaddieren sowie weitere Bildverarbeitungsschritte vorzunehmen.

Die Erfindung bietet somit den Vorteil, dass eine aufwendige softwaregestützte Kompensation des Bildversatzes nicht mehr erforderlich ist. Die pixelgenaue Überlagerung des Durchlicht-Interferenz-Kontrast-Bildes und des Fluoreszenzbildes resultiert in einem Überlagerungsbild, dessen Bildqualität deutlich verbessert ist und eine exaktere Auswertung des gewonnenen Überlagerungsbildes zulässt.

### Bezugszeichenliste

- 1.: Analysator
- 2.: erste Glaskeilplatte
- 3.: zweite Glaskeilplatte
- 4.: Aufnahmering
- 5.: Distanzring
- 6.: Vektor der Strahlablenkung durch den Analysator 1
- 7.: Vektor der Strahlablenkung durch die erste Glaskeilplatte
- 8.: Vektor der Strahlablenkung durch die zweite Glaskeilplatte
- 9.: Vektor der Summen-Strahlablenkung durch beide Glaskeilplatten 2,3
- 10.: Vektor der maximalen Strahlablenkung durch den Analysator 1
- 11.: Durchlicht-Lichtquelle
- 12.: Durchlichtstrahlengang
- 13.: Beleuchtungsoptik
- 14.: Polarisator
- 15.: erstes Wollastonprisma
- 16.: Kondensor
- 17.: Probe
- 18.: Mikroskoptisch
- 19.: Objektiv
- 20.: Zwischenbildebene
- 21.: zweites Wollastonprisma
- 22.: Tubusoptik
- 23.: Einrichtungswechsler
- 24.: Drehachse
- 25.: Anregungsfilter
- 26.: halbdurchlässiger Strahlteiler
- 27.: Sperrfilter
- 28.: Auflichtstrahlengang
- 29.: Auflicht-Lichtquelle
- 30.: Auflicht-Beleuchtungsoptik
- 31.: Linsenelemente
- 32.: Blenden
- 33.: Okulare
- 34.: CCD-Chip
- 35.: Kamera

## Patentansprüche

1. Mikroskop mit einer Durchlicht-Interferenz-Kontrast-Einrichtung, welche einen Analysator (1) im Abbildungsstrahlengang umfasst,
**dadurch gekennzeichnet,**
**dass** in Abbildungsrichtung unmittelbar hinter dem Analysator (1) zusätzlich zwei Glaskeilplatten (2, 3) angeordnet sind, die so ausgebildet und ausgerichtet sind , dass die Summen-Strahlablenkung der beiden Glaskeilplatten (2, 3) die vom Analysator (1) erzeugte Strahlablenkung zu Null kompensiert.

2. Mikroskop nach Anspruch 1, **dadurch gekennzeichnet, dass** es zusätzlich eine Fluoreszenzeinrichtung umfasst.

3. Mikroskop nach einem der Ansprüche 1 oder 2, **dadurch gekennzeichnet, dass** der Analysator (1) und die beiden Glaskeilplatten (2, 3) in einer gemeinsamen Halterung angeordnet sind.

4. Mikroskop nach einem der Ansprüche 1 oder 2, **dadurch gekennzeichnet, dass** der Analysator (1) und die beiden Glaskeilplatten (2, 3) reversibel in den Strahlengang einfügbar ist.

5. Mikroskop nach Anspruch 1, **dadurch gekennzeichnet, dass** der Analysator (1) als Polarisationsfolie ausgebildet ist.

6. Mikroskop nach Anspruch 1, **dadurch gekennzeichnet, dass** die beiden Glaskeilplatten (2, 3) mit identischen Keilwinkeln ausgebildet sind.

7. Mikroskop nach Anspruch 2, **dadurch gekennzeichnet,**
**dass** die Durchlicht-Interferenz-Kontrast-Einrichtung und die Fluoreszenzeinrichtung wahlweise alternativ in den Strahlengang einfügbar sind, wobei jeweils das mittels der Durchlicht-Interferenz-Kontrast-Einrichtung erzeugte Mikroskopbild und das mittels der Fluoreszenzeinrichtung erzeugte Mikroskopbild deckungsgleich und pixelgenau auf den CCD-Chip einer Kamera abgebildet wird.

8. Mikroskopierverfahren zur Erzeugung von Überlagerungsbildern mit den Schritten
- Erzeugen eines ersten Mikroskopbildes mittels einer Durchlicht-Interferenz-Kontrast-Einrichtung und Aufnehmen des ersten Mikroskopbildes mit einer Kamera,
- Erzeugen eines zweiten Mikroskopbildes mittels einer Fluoreszenzeinrichtung und Aufnehmen des zweiten Mikroskopbildes mit derselben Kamera,
- Erzeugen eines Überlagerungsbildes durch Überlagern des ersten Mikroskopbildes und des zweiten Mikroskopbildes,
- Kompensieren des Bildversatzes des ersten Mikroskopbildes gegenüber dem zweiten Mikroskopbild zu Null,
**dadurch gekennzeichnet**,
die Kompensation des Bildversatzes des ersten Mikroskopbildes gegenüber dem zweiten Mikroskopbild mit optischen Mitteln erfolgt, indem in der Durchlicht-Interferenz-Kontrast-Einrichtung in Abbildungsrichtung unmittelbar hinter dem Analysator (1) zwei Glaskeilplatten (2, 3) angeordnet werden, die so ausgebildet und ausgerichtet sind, dass die Summen-Strahlablenkung der beiden Glaskeilplatten (2, 3) die vom Analysator (1) erzeugte Strahlablenkung, welche den Bildversatz verursacht, zu Null kompensiert wird.

9. Mikroskopierverfahren nach Anspruch 8, **dadurch gekennzeichnet, dass** das Überlagerungsbild direkt durch pixelgenaues Überlagern des ersten Mikroskopbildes und des zweiten Mikroskopbildes auf dem CCD-Chip der Kamera erzeugt wird.

10. Mikroskopierverfahren nach Anspruch 8, **dadurch gekennzeichnet, dass** das Überlagerungsbild erzeugt wird, indem das erste Mikroskopbild und das zweite Mikroskopbild jeweils in einen Bildspeicher übertragen und dort pixelgenau addiert werden.
